# EUROPÄISCHE PATENTSCHRIFT

(11) **EP 0 958 791 B1**
(45) Veröffentlichungstag und Bekanntmachung des Hinweises auf die Patenterteilung: **09.04.2008**
(21) Anmeldenummer: 99890158.1
(22) Anmeldetag: 19.05.1999
(51) Int. Cl.: A61C 1/14

(54) **Lösbare Spannvorrichtung für ein rotierendes medizinisches oder dentales Werkzeug**
Dispositif de serrage amovible pour un outil rotatif medicale ou dentaire
Detachable chuck for a medical or dental rotating tool

(30) Priorität: 20.05.1998 AT 87298
(43) Veröffentlichungstag der Anmeldung: 24.11.1999
(73) Patentinhaber: W & H Dentalwerk Bürmoos GmbH, 5111 Bürmoos (AT)
(72) Erfinder: Helfenbein, Gerald, 5133 Gilgenberg (AT); Schatz, Norbert, 5111 Bürmoos (AT)
(74) Vertreter: Patentanwälte BARGER, PISO & PARTNER

(56) Entgegenhaltungen:
- EP-A- 0 755 661
- FR-A- 2 555 041

## Beschreibung

Die Erfindung betrifft eine lösbare Spannvorrichtung für ein rotierendes medizinisches oder dentales Werkzeug.

Eine spezielle Art medizinischer bzw. dentaler Werkzeuge, die unter relativ großem Drehmoment betrieben werden, weisen am Einspannende im Werkzeugschaft eine Abplattung auf, durch die das Drehmoment übertragen wird. Weiters weisen sie im Bereich der Abplattung eine Ringnut auf, in die während des Betriebs ein Halteglied der Spannvorrichtung radial nach innen ragt, um das Werkzeug in axialer Richtung zu halten.

Der kreiszylindrische Werkzeugschaft steckt in einer kreiszylindrischen Ausnehmung des Handstückkopfes mit möglichst geringem Spiel. Üblicherweise beträgt dieses Spiel in radialer Richtung einige hundertstel Millimeter, was auf die Toleranzen der Abmessungen besonders der Werkzeugschäfte zurückzuführen ist.

Dieses geringe Spiel hat aber beim gegenständlichen Verwendungszweck und bedingt durch die äußerst kleinen Abmessungen des Werkzeuges und damit auch des Werkzeugkopfes drastische Auswirkungen auf den Betrieb derartiger Werkzeuge: Es bedeutet nämlich ein Spiel von einigen hundertstel Millimetern, daß der Bohrer in einer Größenordnung beweglich ist, die der halben Spanhöhe entsprechen kann. Dies bedeutet insbesondere bei den verwendeten Drehzahlen, daß die Maßhaltigkeit der Bohrung stark leidet, die Qualität der Bohrungsoberfläche und der Bohrungsränder deutlich verschlechtert wird und daß es für den Patienten zu größeren Vibrationen und Schmerzen kommt.

Vorbekannte Werkzeughalterungen für derartige Werkzeugschäfte sind beispielsweise aus der DE 30 12 240 A, der DE 34 42 386 A, dem DE-G 89 13 626.8 U der EP 0 322 896 B, der EP 0 470 324 B und der EP 0 820 734 A bekannt. All den vorbekannten Werkzeugaufnahmen haften die oben genannten Nachteile an.

Die Erfindung bezweckt hier Abhilfe zu schaffen und eine Werkzeugspannvorrichtung anzugeben, bei der die genannten Nachteile nicht auftreten und die dennoch alle Vorteile der vorbekannten Lösung erhält.

Erfindungsgemäß werden diese Ziele dadurch erreicht, daß eine weitere, kraftschlüssige Halterung des Werkzeuges vorgesehen ist, beispielsweise dadurch, daß die den kreiszylindrischen Teil des Werkzeugschaftes umgebende Hülse eine Spannzange aufweist bzw. als Spannzange ausgebildet ist.

Durch diese Maßnahme wird eine zusätzliche kraftschlüssige und damit spielfreie Halterung des Werkzeugschaftes erreicht, deren Haltekraft zur Fixierung während des üblichen Betriebes, abgesehen von den zur Übertragung des Antriebsdrehmomentes notwendigen Kräften, durchaus ausreicht und so im normalen Betrieb eine im wesentlichen spielfreie und darüber hinaus zentrierte Halterung des Werkzeuges bewirkt.

In einer Ausgestaltung der Erfindung wird diese Spannzange durch Betätigung eines Druckknopfes gelöst, wobei dieser Druckknopf auch die radiale Fixierung im Bereich der Nut des Werkzeugschaftes ausrückt.

Die Erfindung betrifft auch eine spezielle Ausgestaltung dieser radial ausrückbaren Fixierung.

Im folgenden wird die Erfindung an Hand eines bevorzugten Ausführungsbeispieles unter Bezugnahme auf die beiliegenden Zeichnungen näher erläutert. Dabei zeigt
die Fig. 1 einen Werkzeugschaft, auf dessen Halterung sich die Erfindung bezieht, im Schrägriß,
die Fig. 2 den Kopf eines dentalen Winkelstückes mit erfindungsgemäßer Spannzange im Schnitt,
die Fig. 3 die eigentliche Spannvorrichtung gemäß Fig. 2 in vergrößertem Maßstab,
die Fig. 4 und 5 jeweils eine isometrische Ansicht einer in einem Achsschnitt halbierten erfindungsgemäßen Werkzeughalterung unter verschiedenem Blickwinkel und
die Fig. 6 eine erfindungsgemäß ausgebildete axiale Halterung.

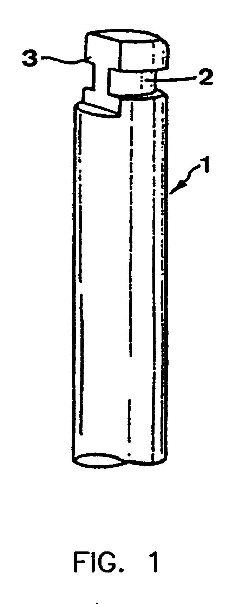

Die Fig. 1 zeigt das handstückseitige Ende eines Werkzeugschaftes 1. Dieser weist eine Ringnut 2 und eine Abplattung 3 auf. Derartige Werkzeugschäfte sind in standartisierter Form seit langem bekannt und dienen insbesondere zur Übertragung hoher Drehmomente. Diese Drehmomentübertragung erfolgt durch einen in der Werkzeughalterung vorgesehenen, mit dieser rotierenden, Vorsprung, der mit der Abplattung 3 formschlüssig zusammenwirkt. Die Ringnut 2 dient zur axialen Fixierung des Werkzeuges, da dieses gemäß dem Stand der Technik nur mit möglichst geringem Spiel, aber ansonsten nicht gehalten, in eine Werkzeugaufnahme eingeschoben ist und dadurch in axialer Richtung nicht fixiert wird.

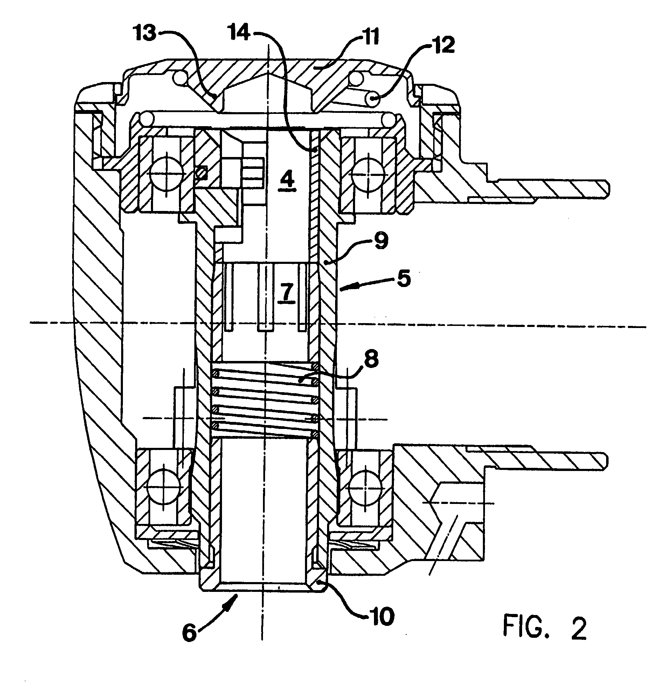

Aus Fig. 2 ist eine erfindungsgemäße Werkzeughalterung 4 ersichtlich. Diese weist in ihrem oberen Bereich die für die Aufnahme derartiger Werkzeuge bekannten Elemente auf, die weiter unten in einer besonderen Ausgestaltung näher beschrieben werden.

Im mittleren Bereich 5 ist die Werkzeugaufnahme 6 als Spannzange 7 ausgebildet, die durch eine Feder 8 in die geschlossene, das Werkzeug haltende, Lage gedrängt wird. Dazu ist die Spannzange 7 an ihrem oberen Ende außen konisch ausgebildet und wirkt mit einem korrespondierenden Konus einer Außenhülse 9 zusammen. Die Feder 8, die sich mit ihrem einen Ende an der Spannzange 7 abstützt, stützt sich mit ihrem anderen Ende an einer Einpreßhülse 10 ab, die fest in der Außenhülse 9 sitzt.

Betätigt wird die Spannzange 7 durch einen Druckknopf 11, der, beispielsweise vom Daumen des Benutzers, gegen die Kraft einer Feder 12 nach unten gedrückt werden kann. Bei dieser Bewegung gelangt ein ringförmiger Vorsprung 13 des Druckknopfes 11 in den Bereich einer Schubhülse 14, die an den einzelnen federnden Enden der Spannzange 7 fluchtend aufsitzt.

Die Schubhülse 14 weist an ihrem dem Druckknopf 11 zugewandten Ende eine Ausnehmung auf, um den Durchtritt und die Bewegung des an sich bekannten Haltemechanismus für die Abplattung und die Ringnut des Werkzeugschaftes zu erlauben. An ihrem der Spannzange zugewandten Ende ist die Hülse 14 in Umfangsrichtung durchgehend ausgebildet und übt somit den über den Druckknopf 11 aufgebrachten Druck im wesentlichen konzentrisch auf die Spannzange 7 aus.

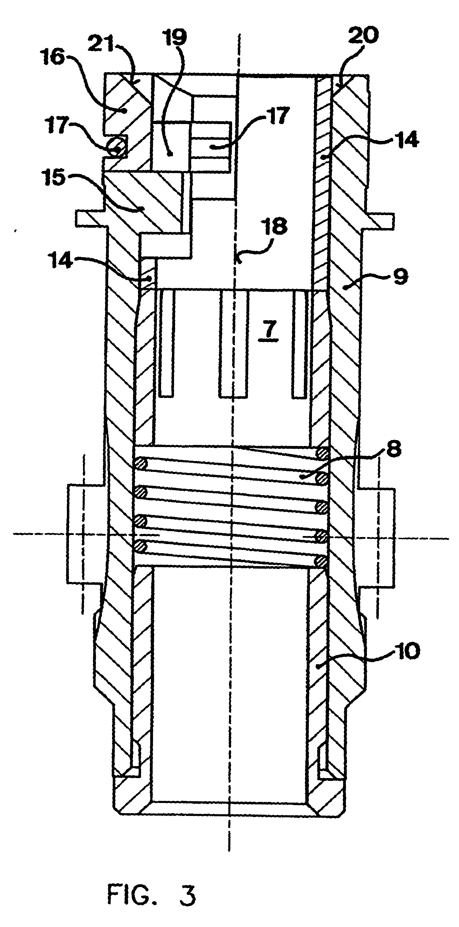

Die Spannvorrichtung ist in Fig. 3 in größerem Maßstab detailliert dargestellt.

Die Außenhülse 9 trägt einen mit der Abplattung 3 des Werkzeugschaftes 1 zusammenwirkenden Vorsprung 15, der die Einstecktiefe des Bohrers begrenzt und so massiv ausgestaltet ist, daß er die aufgrund der Werkzeugschaftform unvermeidliche Unwucht zumindest im wesentlichen ausgleicht. Die axiale Halterung erfolgt in der dargestellten bevorzugten Ausführungsform durch ein Element 16, das im wesentlichen halbringförmig bzw. hufeisenförmig in einer entsprechenden Ausnehmung der Außenhülse 9 eingesetzt ist und dort durch eine Bogenfeder 17 gehalten und zur Achse 18 des Werkzeughalters hin gedrückt wird.

Die Axialhalterung 16 weist zwei seitliche Vorsprünge 19 auf, von denen in Fig. 3 nur der hinter der Schnittebene liegende zu sehen ist. Diese beiden Vorsprünge 19 werden durch die Kraft der Feder 17 in die Nut 2 des Werkzeugschaftes 1 gedrückt.

In Fig. 3 ist die Ausnehmung in der Schubhülse 14 und der Außenhülse 9 im Bereich der beiden Vorsprünge 19 zu sehen, durch die die Feder 17 zu erblicken ist.

Die Außenhülse 9 trägt an ihrem oberen inneren Rand eine Abschrägung 20, die (Fig. 2) als Rast und Bewegungsbegrenzung für den Druckknopf 11 dient. Eine ähnliche Abschrägung 21 trägt auch die bewegliche Axialsicherung 16, die durch die Bewegung des Druckknopfes 11 nach außen (in Fig. 2 und 3 nach links) gedrängt wird. Durch diese Bewegung wird auch die Schubhülse 14 nach unten gedrückt (gegen die Kraft der Feder 8), wodurch sich die Spannzange 7, die vom Bereich des Innenkonus der Außenhülse 9 frei kommt und aufgrund der Elastizität der einzelnen Elemente der Spannhülse sich nach außen bewegt, öffnet.

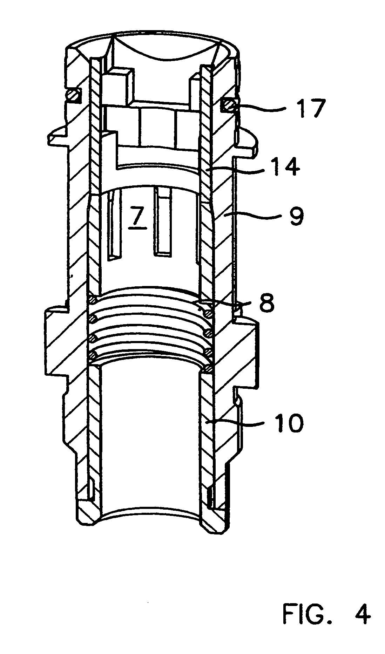

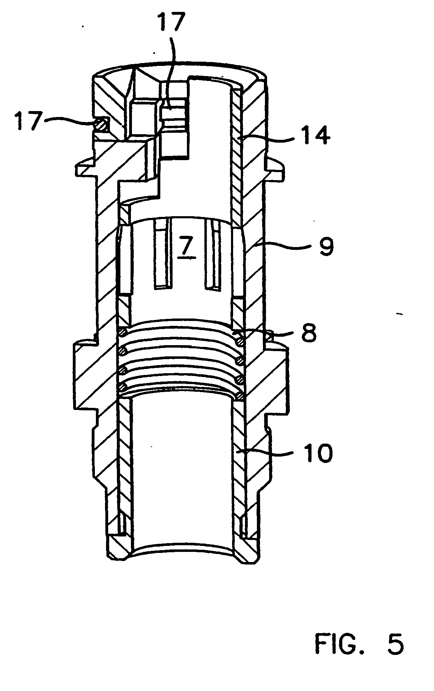

Die Fig. 4 und 5 zeigen, aus zwei unterschiedlichen Richtungen, eine axial geschnittene Werkzeughalterung zur Verdeutlichung des Aufbaues.

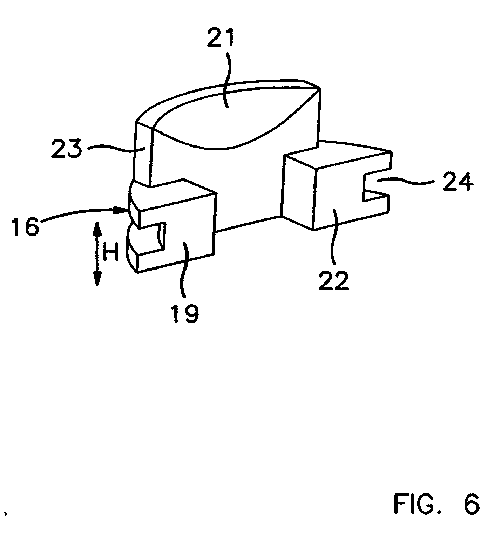

Die Fig. 6 zeigt eine erfindungsgemäß ausgebildete axiale Halterung 16. Die axiale Halterung 16 besteht aus einem im wesentlichen kreissegment-zylinderförmigen Bereich 22, dessen Höhe H kleiner oder gleich ist der Höhe der Ringnut 2 des Werkzeugschaftes 1 und aus einem daran anschließenden Wandbereich 23, der an seinem dem kreissegment-zylinderförmigen Bereich 22 abgewandten Ende eine Abschrägung 21 trägt.

Die Innenseite des Wandbereiches 23 liegt im aktiven Zustand der Werkzeughalterung an der Abplattung 3 des Werkzeugschaftes 1 an, die über den Wandbereich ragenden Teile des zylinderförmigen Bereiches 22, die Vorsprünge 19 bilden, treten in die Ringnut 2 des Werkzeugschaftes 1 ein und bewirken die axiale Halterung. In einer nicht dargestellten Variante kann die Höhe der Vorsprünge 19 vom Wandteil 23 ausgehend in einem inneren Bereich abnehmend ausgebildet sein, um in der Ringnut 2 des Werkzeugschftes 1 die immer vorhandenen Toleranzen auszugleichen. Es ist in diesem Fall vorteilhaft, wenn die Spannzange erst dann eine merkliche Haltekraft ausübt, wenn die Vorsprünge 19 bereits vollständig in die Ringnut 2 eingetreten sind.

Die erfindungsgemäße axiale Halterung 16 kann auch in Werkzeughalterungen verwendet werden, die keine kraftschlüssige Halterung des Werkzeuges aufweisen, dies bringt eine bessere Massenverteilung der rotierenden Massen und durch den an den Werkzeugschaft angedrückten Wandbereich eine bessere Halterung als bei vorbekannten Werkzeughalterungen erzielbar mit sich.

Die Erfindung ist nicht auf das dargestellte Ausführungsbeispiel beschränkt, sondern kann verschiedentlich abgewandelt werden. So kann insbesondere die Spannzange anders als dargestellt ausgebildet sein, so können beispielsweise ihre Spannelemente in Richtung des Bohrerendes zeigen, oder sie kann als Doppelspannzange ausgebildet sein. Analog zu diesen Varianten können auch die Konusflächen unterschiedlich gestaltet sein und auf anderen Bauteilen angeordnet sein. Schließlich kann die Spannzange zu einer Art Schraubfeder werden, die bei Ausüben von axialem Druck ihren Durchmesser so weit vergrößert, daß sie den Werkzeugschaft freigibt.

Andere Varianten betreffen beispielsweise die Axialsicherung 16, die nicht die dargestellte Ausbildung haben muß, sondern eine der aus den oben zitierten Druckschriften vorbekannte Ausbildung erfahren kann. Es ist sogar möglich, auf die axiale Sicherung zu verzichten, da bei entsprechender Dimensionierung der Feder 8 und des Innenkonus der Außenhülse 9 die Haltekraft der erfindungsgemäß vorgesehenen Spannzange auch bei ziehendem Arbeiten zur Fixierung des Werkzeuges ausreicht, doch wird eine solche Ausbildung aus Sicherheitsüberlegungen nicht bevorzugt.

## Patentansprüche

1. Lösbare Spannvorrichtung für ein rotierendes medizinisches oder dentales Werkzeug, wobei das Einspannende des Werkzeugschaftes (1) eine Abplattung (3) aufweist und im Bereich der Abplattung weiters eine Ringnut (2) aufweist, in die während des Betriebs ein Halteglied (19) der Spannvorrichtung radial nach innen ragt, **dadurch gekennzeichnet, daß** die Spannvorrichtung eine mit dem kreiszylindrischen Teil des Werkzeugschaftes (1) zusammenwirkende kraftschlüssige Halterung, beispielsweise eine Spannzange (7), aufweist.

2. Spannvorrichtung nach Anspruch 1, **dadurch gekennzeichnet, daß** die Spannzange (7) durch einen Druckknopf (11) betätigt wird, der gegen die Kraft einer Feder (8) über eine Schubhülse (14) auf die federnden Elemente der Spannzange (7) drückbar ist.

3. Spannvorrichtung nach Anspruch 2, **dadurch gekennzeichnet, daß** der Druckknopf (11) einen ringförmigen Vorsprung (13) aufweist, der bei Betätigung des Druckknopfes auf eine Abschrägung (21) der axialen Halterung (16) eine radial nach außen gerichtete Kraft ausübt, durch die die axiale Halterung (16) gegen die Kraft einer Feder (17) nach außen bewegt wird.

4. Spannvorrichtung nach Anspruch 3, **dadurch gekennzeichnet, daß** der ringförmige Vorsprung (13) auf die Schubhülse (14) drückt.

5. Spannvorrichtung nach einem der vorstehenden Ansprüche, **dadurch gekennzeichnet, daß** die axiale Halterung (16) aus einem im wesentlichen kreissegment- zylinderförmigen Bereich (22) besteht, dessen Höhe (H) kleiner oder gleich ist der Höhe der Ringnut (2) des Werkzeugschaftes (1) und aus einem daran anschließenden Wandbereich (23), der an seinem dem kreissegment- zylinderförmigen Bereich (22) abgewandten Ende eine Abschrägung (21) trägt.

6. Spannvorrichtung nach Anspruch 5, **dadurch gekennzeichnet, daß** der kreissegment-zylinderförmige Bereich (22) eine Ringnut (24) aufweist, die zur Aufnahme einer Feder, bevorzugt einer Bogenfeder (17), dient.

7. Spannvorrichtung nach einem der vorstehenden Ansprüche, **dadurch gekennzeichnet, daß** die Höhe der Vorsprünge (19), vom Wandteil (23) ausgehend, zumindest in einem radial inneren Bereich abnehmend ausgebildet ist.

## Claims

1. Releasable clamping device for a rotating medical or dental tool, the end for clamping of the shank (1) of the tool having a flat (3) and also having, in the region of the flat, an annular groove (2) into which a retaining member (19) of the clamping device projects in a radially inward direction during operation, **characterised in that** the clamping device has a holding means operating by friction, such as a collet (7) for example, which cooperates with the circular, cylindrical part of the shank (1) of the tool.

2. Clamping device according to Claim 1, **characterised in that** the collet (7) is operated by a press-button (11) which can be pressed against the resilient elements of the collet (7) via a thrust-sleeve (14) in opposition to the force exerted by a spring (8).

3. Clamping device according to Claim 2, **characterised in that** the press-button (11) has an annular projection (13) which, when the press-button is pressed, exerts on a bevel (21) on the axial holding means (16) a force directed in a radially outward direction by which the axial holding means (16) is moved outwards in opposition to the force exerted by a spring (17).

4. Clamping device according to Claim 3, **characterised in that** the annular projection (13) presses against the thrust-sleeve (14).

5. Clamping device according to any one of the preceding claims, **characterised in that** the axial holding means (16) comprises a region (22) substantially in the form of a sector of a circular cylinder whose height (H) is equal to or less than the height of the annular groove (2) in the shank (1) of the tool and comprises a wall region (23) which is connected to the region (22) in the form of a sector of a circular cylinder and which carries a bevel (21) at its end remote from said region (22).

6. Clamping device according to Claim 5, **characterised in that** the region (22) in the form of a sector of a circular cylinder has an annular groove (24) which serves to receive a spring, preferably an arcuate spring (17).

7. Clamping device according to any one of the preceding claims, **characterised in that**, starting from the wall part (23), the height of the projections (19) is arranged to decrease, at least in a radially inner region.

## Revendications

1. Dispositif de serrage amovible pour un outil médical ou dentaire rotatif, l'extrémité à serrer de la tige d'outil (1) présentant un aplatissement (3) et, dans la zone aplatie, également une rainure annulaire (2) dans laquelle fait saillie radialement vers l'intérieur, pendant le fonctionnement, un élément de maintien (19) du dispositif de serrage, **caractérisé en ce que** le dispositif de serrage présente un dispositif de maintien par adhérence coopérant avec la partie cylindrique de la tige d'outil (1), par exemple une pince de serrage (7).

2. Dispositif de serrage selon la revendication 1, **caractérisé en ce que** la pince de serrage (7) est actionnée par un bouton-poussoir (11) qui peut appuyer contre la force d'un ressort (8), par l'intermédiaire d'une douille coulissante (14), sur les éléments à ressort de la pince de serrage (7).

3. Dispositif de serrage selon la revendication 2, **caractérisé en ce que** le bouton-poussoir (11) présente une saillie annulaire (13) qui, lorsque l'on actionne le bouton-poussoir, exerce, sur une partie biseautée (21) du dispositif de maintien axial (16), une force dirigée radialement vers l'extérieur, laquelle déplace le dispositif de maintien axial (16) vers l'extérieur contre la force d'un ressort (17).

4. Dispositif de serrage selon la revendication 3, **caractérisé en ce que** la saillie annulaire (13) appuie sur la douille coulissante (14).

5. Dispositif de serrage selon l'une des revendications précédentes, **caractérisé en ce que** le dispositif de maintien axial (16) est composé d'une zone essentiellement en forme de segment de cercle cylindrique (22), dont la hauteur (H) est inférieure ou égale à la hauteur de la rainure annulaire (2) de la tige d'outil (1), et d'une zone de paroi (23) faisant suite à la précédente, qui porte à son extrémité opposée à la zone en forme de segment de cercle cylindrique (22) une partie biseautée (21).

6. Dispositif de serrage selon la revendication 5, **caractérisé en ce que** la zone en forme de segment de cercle cylindrique (22) présente une rainure annulaire (24) servant à recevoir un ressort, de préférence un ressort en arc (17).

7. Dispositif de serrage selon l'une des revendications précédentes, **caractérisé en ce qu'**à partir de la zone de paroi (23), la hauteur des saillies (19) va en diminuant au moins dans une zone située radialement à l'intérieur.
